# EUROPEAN PATENT APPLICATION

(11) **EP 0 804 025 A2**
(43) Date of publication of application: **29.10.1997**
(21) Application number: 97302868.1
(22) Date of filing: 25.04.1997
(51) Int. Cl.: H04N 5/44

(54) **Converter and method for use with an interlaced line scanning signal**

(30) Priority: 26.04.1996 JP 107291/96
(71) Applicant: NIPPON TELEVISION NETWORK CORPORATION, Tokyo 102 (JP)
(72) Inventor: Hori, Akihiro, Chiyoda-ku, Tokyo (JP)
(74) Representative: Orchard, Oliver John

(57) **Abstract**

A converter for converting an interlaced signal into a progressive scan signal includes a low pass filter for vertically filtering an interlaced signal in a present field, a high pass filter for vertically filtering an interlaced signal in a field previous to the present field, and addition means for generating an interpolation line signal in the present field by summing the output of the high pass filter and the output of the low pass filter.

## Description

The present invention relates to the conversion of an interlaced line scanning signal into a progressive scanning signal.

The recent trend in the broadcasting field has been towards a high resolution television picture. At present, the interlaced system has been used as a broadcast signal in TV. However, the progressive scan system is expected to be increasingly used in the future.

In order to convert the interlaced signal which is presently in use into the progressive scan signal, an interpolation line is qenerated.

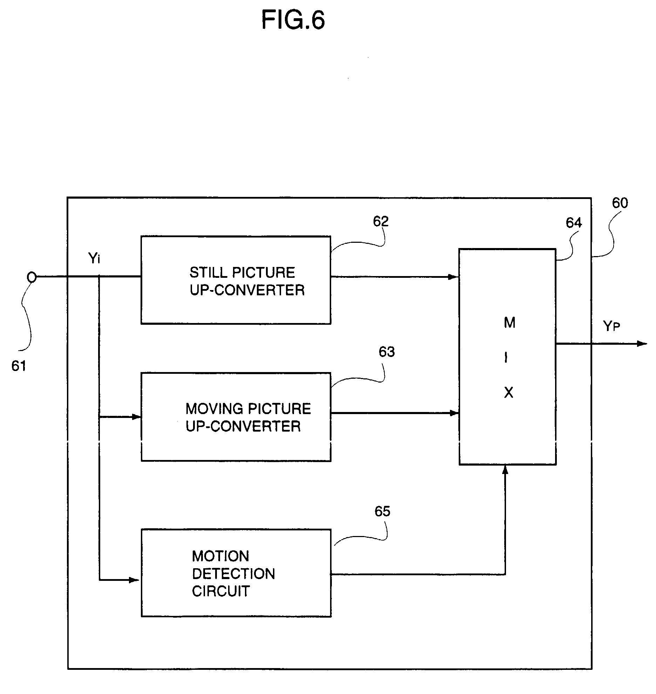

Reference will now be made to Fig. 6 of the accompanying drawings which shows a block schematic diagram of a previously proposed converter 60 for converting an interlaced signal into a progressive scan signal.

An input luminance signal supplied to a terminal 61, i.e., an interlaced signal, is hereinafter referred to as luminance signal Yᵢ.

The luminance signal Yᵢ is supplied to the converter 60 for progressive scanning, and then converted into a luminance signal Yₚ of a progressive scan system.

More specifically the luminance signal Yᵢ is supplied to a still picture up-converter 62 for a still image, so that a progressive luminance signal for the still image is generated. The luminance signal Yᵢ is also supplied to a moving picture converter 63 for a motion picture, so that a progressive luminance signal for a motion picture is generated.

The respective luminance signals for the still picture and the motion picture are mixed in a mixer circuit 64 in accordance with the movement of the video image.

A reference numeral 65 indicates a motion detection circuit to which the interlaced luminance signal Yᵢ is applied. The mixture ratio of the mixer circuit 64 is subject to adaptive control based on the output of the motion detection circuit 65.

In order to mix the still picture and the motion picture appropriately, the converter 60 requires high accuracy detection of the motion detection circuit 65.

However it is impossible to detect the motion completely, thus leading to undesirable video quality.

Moreover the size of the circuit of the converter 60 has been large, leading to a high cost.

Features of arrangements to be described below, by way of example in illustration of the invention, are that it is possible to convert an interlaced signal into a progressive scan signal without the need for a motion detection circuit, that delay during the scanning line conversion is minimised, and that a 4:2:2 component interlaced signal can be converted into a 4:2:0p component progressive scan signal in a simply constructed unit.

In a particular embodiment to be described below, by way of example in illustration of the invention a converter for converting an interlaced signal into a progressive scan signal includes a low pass filter for vertically filtering an interlaced signal occupying a present field, a high pass filter for vertically filtering an interlaced signal in a field previous to the present field, and addition means for generating an interpolation line signal in the present field by summing an output of the high pass filter and an output of the low pass filter.

In a converter for converting 4:2:2 component data into 4:2:0p component data to be described below by way of example in illustration of the invention there is a low pass filter for vertically filtering luminance data of the 4:2:2 component data in a present field, a high pass filter for vertically filtering luminance data of the 4:2:2 component data in a field previous to the present field, addition means for generating interpolation line luminance data in the present field by summing an output of the high pass filter and an output of the low pass filter, and multiplex means for generating 4:2:0p component data by multiplexing luminance data and colour difference data in the present field and interpolation line luminance data in the present field.

The interlaced signal in the previous field can be obtained by providing delay means for delaying the input interlaced signal by one field, for example, a field memory or the like.

In a particular preferred embodiment the low pass filter is constructed to filter the signal components of M lines (M is an even number) of an interlaced signal in a present field, an interpolation line position is set as a centre, and the high pass filter is constructed to filter the signal components of N lines (N is an odd number) of an interlaced signal in a previous field, and a line is set at the position of the interpolation line as a centre.

An improved effect may be obtained with a simple construction if low pass filters, each having a normalized filter coefficient of 4/8 and 4/8, are constructed to filter signal components of a pair of upper and lower lines of an interlaced signal in a present field, setting an interpolation line as a centre, and the high pass filters, each having a normalized filter of -1/8, 2/8, -1/8, are constructed to filter signal components of 3 lines of an interlaced signal in a previous field, setting a line at the position of the interpolation line as a centre line.

A particular scanning line conversion method to be described below, by way of example in illustration of the invention includes the steps of generating a predetermined low frequency component including filtering components of M lines (M is an even number) of an interlaced signal in a present field through a low pass filter, setting an interpolation line position as a centre, and generating a predetermined high frequency component including filtering components of N lines (N is an odd number) of an interlaced signal in a previous field through a high pass filter, and setting a line at a position of the interpolation line as a centre line.

One method to be described below, by way of example in illustration of the invention, for converting 4:2:2 component data into 4:2:0p component data includes the steps of generating a predetermined low frequency component by vertically filtering luminance data of a 4:2:2 component data in a present field through a low pass filter, qeneratinq a predetermined high frequency component by vertically filtering luminance data of a 4:2:2 component data in a field previous to the present field through a high pass filter, generating luminance data of an interpolation line in the present field by summing the predetermined low frequency component and the predetermined high frequency component, and generating 4:2:2:0p component data by multiplexing the luminance data and colour difference data of the 4:2:2 component data in the present field and the luminance data of the interpolation line in the present field.

In a preferred arrangement the step of generating a predetermined low frequency component includes filtering the signal components of M lines (M is an even number) of an interlaced signal in the present field through a low pass filter, setting an interpolation line position as a centre, generating a predetermined high frequency component including filtering the signal components of N lines (N is an odd number) of an interlaced signal in a field previous to the present field through a high pass filter, and setting a line at the position of the interpolation line as a centre line.

The step of generating a predetermined low frequency component in a particular preferred embodiment to be described below by way of example in illustration of the invention includes filtering the signal components of a pair of upper and lower lines of an interlaced signal in a present field through low pass filters each having a normalized filter coefficient of 4/8 and 4/8, setting an interpolation line position as a centre, and generating a predetermined high frequency component including filtering signal components of three lines of an interlaced signal in a field previous to the present field through high pass filters each having a normalized filter coefficient of -1/8, 2/8 and -1/8, and setting a line at the position of the interpolation line as a centre line.

The following description and drawings disclose, by means of examples, the invention which is characterised in the appended claims, whose terms determine the extent of the protection conferred hereby.

In the drawings:-
Fig. 1 is a block schematic diagram showing a scanning line converter of an interlace progressive scan system,
Fig. 2 is a block schematic diagram showing the construction of a vertical low pass filter 2 and a vertical high pass filter 3,
Fig. 3 is a diagram for use in explaining the operation of the vertical low pass filter 2 and the vertical high pass filter 3,
Fig. 4 is a block schematic diagram of a scanning line converter for converting 4:2:2 component interlaced signal into 4:2:0p component progressive scan signal, and
Fig. 5 is a chart for use in explaining the 4:2:2 component interlaced signal and the 4:2:0p component progressive scan signal, respectively.

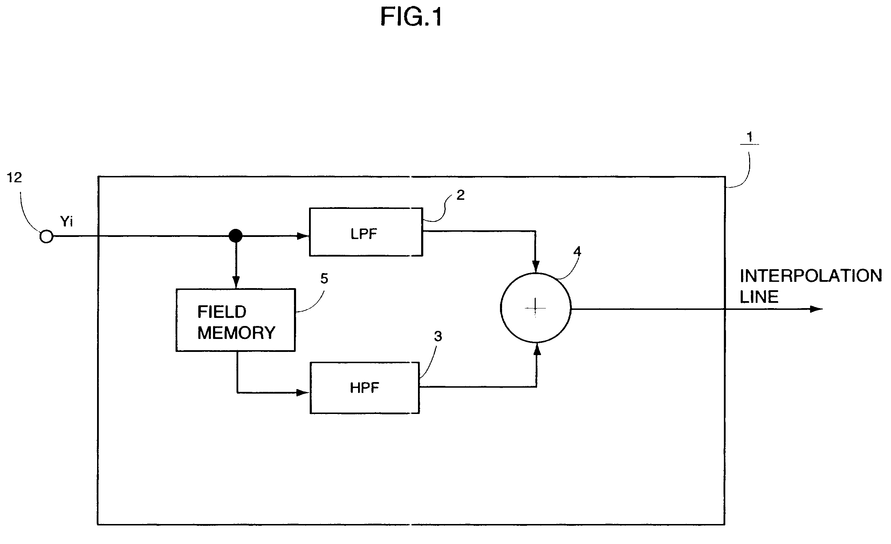

Referring to Fig. 1, there is shown an interlaced luminance signal Y₁ supplied from a terminal 12 input to a converter 1. A field interpolating the scanning line is hereinafter referred to as a present field.

The converter 1 includes a vertical low pass filter 2 for vertically filtering the input interlaced luminance signal Yᵢ, a vertical high pass filter 3 for vertically filtering the input interlaced luminance signal Yi, an adder 4 for summing the output of the vertical low pass filter 2 and the output of the vertical high pass filter 3 and a field memory 5 for delaying the input interlaced luminance signal Yᵢ by 1 field for outputting to the vertical high pass filter 3.

An interpolation line luminance signal for interpolating the interlaced luminance signal Yᵢ in the present field is generated by summing the interlaced luminance signal Yᵢ in the present field that has been passed through the vertical low pass filter 2 and the luminance signal Yᵢ that has been delayed by the field memory 5, i.e., passing the interlaced luminance signal Yᵢ at a field that is one field before (previous field) the present field through the vertical high pass filter 3.

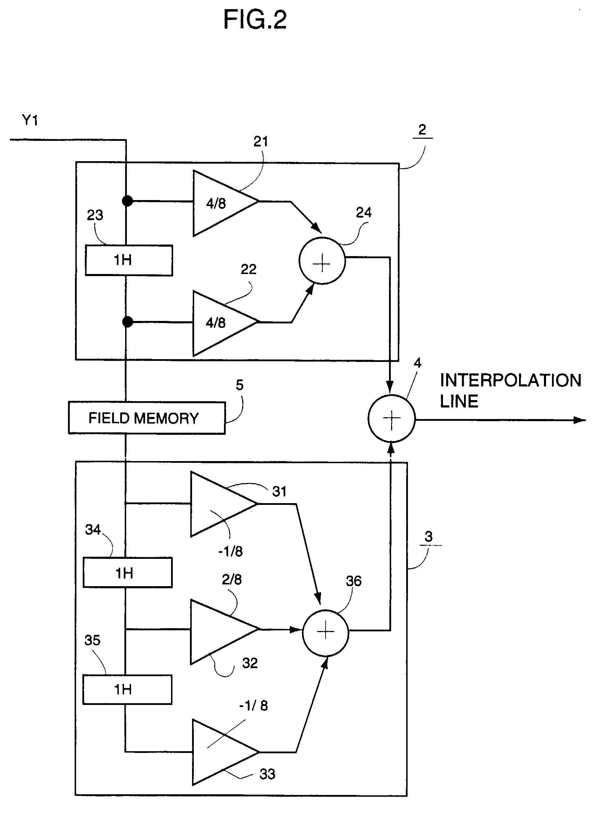

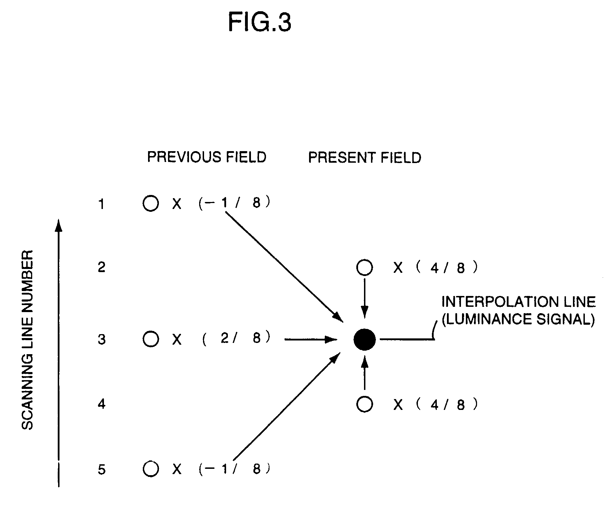

The operation of the vertical low pass filter 2 and the vertical high pass filter 3 will now be further explained in detail. Fig. 2 is a block schematic diagram showing the construction of the vertical low pass filter 2 and the vertical high pass filter 3. Fig. 3 is a diagram for use in explaining further the operation of the vertical low pass filter 2 and the vertical high pass filter 3.

The operation of the vertical low pass filter 2 will be explained first.

Reference numerals 21 and 22 indicate multipliers having coefficients of 4/8 and 4/8, respectively. A reference numeral 23 indicates a delay circuit that delays the interlaced luminance signal Yᵢ by one line. A reference numeral 24 indicates an adder that sums the output of the multiplier 21 and the output of the multiplier 22.

The vertical low pass filter 2 is a two-tap filter for filtering the components of two lines, ahead and behind the interpolation line set as the centre. For example, assuming that a line marked with a filled circle is an interpolation line in Fig. 3 (line 3 in the present field), the components of the lines 2 and 4 which are ahead and behind the interpolating line are calculated.

The operation of the vertical high pass filter 3 will now be explained.

Reference numerals 31, 32 and 33 indicate multipliers having coefficients of -1/8, 2/8 and -1/8, respectively. Reference numerals 34 and 35 indicate delay circuits that delay the interlaced luminance signal Yᵢ by one line. Reference numeral 36 indicates an adder that sums the outputs of the multipliers 31, 32 and 33.

The vertical high pass filter 3 is a three tap filter for filtering the components of three lines, taking a line positioned at the interpolation line as a centre line. For example, assuming that a line marked with a filled circle is an interpolation line in Fig. 3 (line 3 in the present field), the components of the lines 1, 3 and 5 at the previous field are calculated.

The interpolation line luminance signal is obtained from the present field and the previous field.

In order to generate serial data including an original signal and an interpolating signal, both signals, which are data rate converted with FIFO, are input to a switch selected by 2fH (fH: horizontal frequency of an interlaced luminance signal) for outputting alternately.

The data rate conversion is executed by compressing the time duration of the above two signals so as to be contained within one field time of the progressive scan system.

A second illustrative embodiment will now be described.

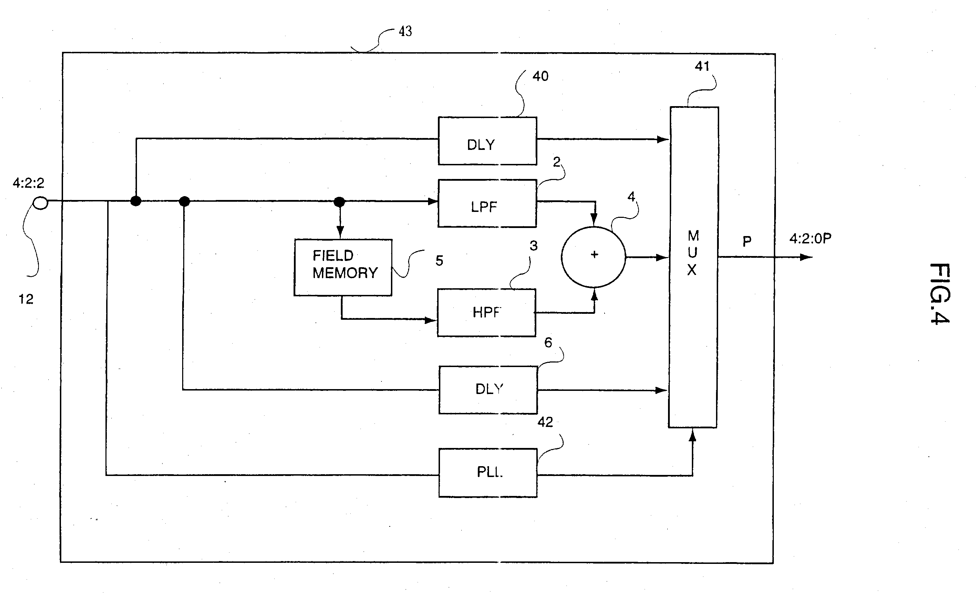

In the second embodiment, a converter 43 converts 4:2:2 component data into 4:2:0p component data. Fig. 4 is a block schematic diagram of the converter 43 for converting the 4:2:2 component data into the 4:2:0p data. Similar elements are given the same reference numerals as those of Fig. 3. The differences from the arrangement of embodiment 1 will now be explained.

Unlike the first embodiment, in the arrangement of Fig. 4 a signal which is supplied to the input terminal 12 is 4:2:2 digital component data at a transmission rate of 270 Mb/s (hereinafter referred to as a component signal I). The component signal I is then converted into 4:2:0p digital progressive scan component data (hereinafter referred to as a component progressive scan signal P).

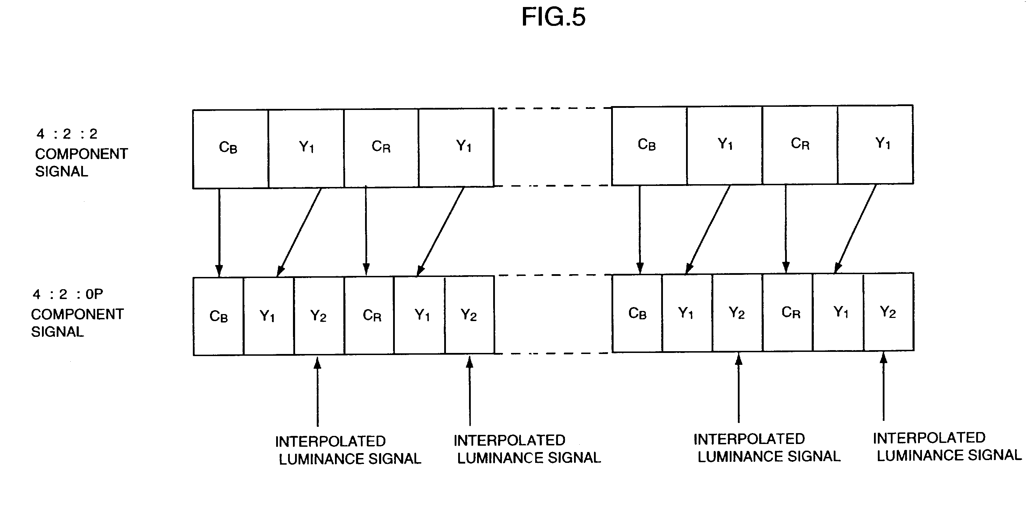

The description of the component data I and the component data P will now be explained. As shown in Fig. 5, the component data I is obtained by multiplexing luminance data Y1 and colour difference data C_{B} and C_{R}. The component data P (4:2:0p) contains colour difference data C_{B} and C_{R} as the interlace and luminance data Y1 and Y2 in the progressive scan. That is, the component data P is formed of 2 lines, a line obtained by multiplexing the luminance data Y1 and either one of the colour difference data C_{B} or C_{R} and a line obtained by multiplexing only the luminance signal Y2. The above signal type is described in detail in the document titled "720 X 483 Active Line at 59.95-Hz Progressive Scan Production - Bit-Serial Interfaces" (SMPTE STANDARD for Television, ANSI/SMPTE 294M - 1997).

The arrangement and operation of a particular embodiment illustrative of the invention will now be described.

A delay circuit 40 delays the input interlace colour difference data C_{B} and C_{R} of the component data T for the time equivalent to the time set by the delay circuit 6.

A multiplexer 41 generates 4:2:0p component data P by multiplexing the interlace colour difference data C_{B}, C_{R}, interlace luminance data I1 and an interpolation line luminance data I2.

A PLL circuit 42 generates a signal at 360 Mhz as a reference clock for the multiplexer 41 based on the component interlace data I at a transmission rate of 270 Mb/s.

The vertical low pass filter 2 and the vertical high pass filter 3 respectively filter the interlace luminance data Y1 of the component data I in the same manner as in the first embodiment described above. Then the adder 4 generates an interpolation line luminance signal Y2.

The interlace colour difference data C_{B} and C_{R} of the component data I that has been demultiplexed are input to the delay circuit 40 and delayed for the time equivalent to the time set by the delay circuit 6. That is the interlace colour difference data C_{B} and C_{R} are delayed for the time taken for generating the interpolation line luminance data Y2.

The above delayed interlace colour difference data C_{B}, C_{R}, interlace luminance data Y1 and the interpolation line luminance data Y2 are simultaneously input to the multiplexer 41 and multiplexed thereby, leading to the generation of the 4:2:0p component data P.

The low pass filter and the high pass filters of the present embodiment are of the 2-tap and the 3-yap types, respectively. However, these low pass and high pass filters are not limited to these particular types. Thus, for example, the low pass filter and the high pass filter could be of the 4-tap and the 5-tap type, respectively.

In the arrangements described above in illustration of the present invention, as the interpolation line is generated by fixed filter based on the present and the previous fields, scanning line conversion processing does not require the signal for a motion image and the signal for a still image to be separated. As a result, a system for detecting the motion that has previously been required is no longer necessary, resulting in the compact circuit described above.

The arrangements described above in illustration of the present invention keep the video quality constant by protecting the resolution from being influenced by the motion image and the still image, employ the present field and the previous field thereby minimising delay due to conversion processing, and require only one field memory for obtaining the signal of the previous field, thus reducing the cost.

It will be understood that, although particular embodiments have been described by way of example in illustration of the invention, variations and modifications thereof, as well as other embodiments, may be made within the scope of the appended claims.

## Claims

1. A converter for converting an interlaced signal into a progressive scan signal including a low pass filter for vertically filtering an interlaced signal in a present field, a high pass filter for vertically filtering an interlaced signal in a field previous to the present field, and addition means for generating an interpolation line signal in the present field by summing an output of the high pass filter and an output of the low pass filter.

2. A converter as claimed in claim 1, wherein the low pass filter filters the siqnal components of the M lines (M is an even number) of an interlaced luminance signal in a present field, an interpolation line position is set as a centre, and the high pass filter filters the signal components of N lines (N is an odd number) of an interlace luminance signal in a field previous to the present field and a line is set at the position of the interpolation line as a centre.

3. A converter as claimed in claim 1, wherein the low pass filter filters the signal components of M lines (M is an even number) of an interlace colour difference signal in a present field, an interpolation line position is set as a centre, the high pass filter filters the signal components of N lines (N is an odd number) of an interlace colour difference signal in a field previous to the present field and a line is set at the position of the interpolation line as a centre.

4. A converter as claimed in claim 2 or claim 3, wherein low pass filters, each having a normalized filter coefficient of 4/8 and 4/8, filter components of a pair of upper and lower lines of an interlaced luminance signal in a present field, an interpolation line being set as a centre, and high pass filters, each having a normalized filter coefficient of -1/8, 2/8, -1/8, filter components of three lines of an interlaced luminance signal in a field previous to the present field, a line being set at the position of the interpolation line as a centre.

5. A converter for converting 4:2:2 component data into 4:2:0p component data including a low pass filter for vertically filtering luminance data of 4:2:2 component data in a present field, a high pass filter for vertically filtering luminance data of the 4:2:2 component data in a field previous to the present field, addition means for generating an interpolation line luminance data in the present field by summing an output of the high pass filter and an output of the low pass filter, and multiplex means for generating 4:2:0p component data by multiplexing luminance data and colour difference data in the present field and interpolation line luminance data in the present field.

6. A converter as claimed in claim 5, wherein the low pass filter filters the luminance data of M lines (M is an even number) of 4:2:2 component data in a present field, an interpolation line position is set as a centre, and the high pass filter filters the luminance data of N lines (N is an odd number) of the 4:2:2 component data in a field previous to the present field, and a line is set at the position of the interpolation line as a centre.

7. A converter as claimed in claim 6, wherein low pass filters, each having a normalized filter coefficient of 4/8 and 4/8, filter luminance data of a pair of upper and lower lines of 4:2:2 component data in a present field, an interpolation line is set as a centre, and high pass filters, each having a normalized filter of -1/8, 2/8, -1/8, filter luminance data of three lines of the 4:2:2 component data in a field, previous to the present field, and a line is set at the position of the interpolation line as the centre line.

8. A scanning line conversion method for converting an interlaced signal into a progressive scan signal including the steps of generating a predetermined low frequency component by vertically filtering an interlaced signal in a present field through a low pass filter, generating a predetermined high frequency component by vertically filtering an interlaced signal in a field previous to the present field, generating an interpolation line signal in the present field by summing the predetermined low frequency component and the predetermined high frequency component, and generating a progressive scan signal by multiplexing the interpolation line signal in the present field and the interlace signal in the present field.

9. A scanning line conversion method as claimed in claim 8, wherein generating a predetermined low frequency component includes filtering components of M lines (M is an even number) of an interlace signal in a present field through a low pass filter, setting an interpolation line position as a centre, and generating a predetermined high frequency component includes filtering components of N lines (N is an odd number) of an interlace signal in a previous field through a high pass filter, and wherein a line is set at a position of the interpolation line as a centre line.

10. A scanning line conversion method as claimed in claim 9, wherein generating a predetermined low frequency component includes filtering components of a pair of upper and lower lines of an interlace signal in a present field through low pass filters each having a normalized filter coefficients of 4/8 and 4/8, an interpolation line position being set as a centre, and generating a predetermined high frequency component includes filtering signal components of three lines of an interlaced signal in a previous field through high pass filters each having a normalized filter coefficients of -1/8, 2/8 and -1/8, a line being set at a position of the interpolation line as a centre line.

11. A scanning line conversion method for converting 4:2:2 component data into 4:2:0p component data including the steps of generating a predetermined low frequency component by vertically filtering luminance data of 4:2:2 component data in a present field through a low pass filter, generating a predetermined high frequency component by vertically filtering luminance data of 4:2:2 component data in a field previous to the present field through a high pass filter, generating luminance data of an interpolation line in a present field by summing the predetermined low frequency component and the predetermined high frequency component, and generating 4:2:0p component data by multiplexing luminance data and colour difference data of the 4:2:2 components data in the present field and luminance data of an interpolation line in the present field.

12. A scanning line conversion method as claimed in claim 11, wherein generating a predetermined low frequency component includes filtering components of M lines (M is an even number) of interlaced luminance data in a present field through a low pass filter, an interpolation line position being set as a centre, and generating a predetermined high frequency component includes filtering components of N lines (N is an odd number) of interlaced luminance data in a previous field through a high pass filter, a line being set at a position of the interpolation line as a centre line.

13. A scanning line conversion method as claimed in claim 13, wherein generating a predetermined low frequency component includes filtering components of a pair of upper and lower lines of interlaced luminance data in a present field through low pass filters each having normalized filter coefficients of 4/8 and 4/8, an interpolation line position being set as a centre; and generating a predetermined high frequency component includes filtering signal components of three lines of interlaced luminance data in a previous field through high pass filters each having a normalized filter coefficients of -1/8, 2/8 and -1/8, a line being set at a position of the interpolation line as a centre line.
